# EUROPÄISCHE PATENTSCHRIFT

(11) **EP 0 622 574 B1**
(45) Veröffentlichungstag und Bekanntmachung des Hinweises auf die Patenterteilung: **28.01.1998**
(21) Anmeldenummer: 94105101.3
(22) Anmeldetag: 31.03.1994
(51) Int. Cl.: F16K 31/528, F16K 1/22

(54) **Betätigungsvorrichtung für ein drehbares Verschlussstück eines Ventils**
Actuating device for a rotatable valve shut-off element
Dispositif de commande d'une pièce rotative d'obturation d'une soupape

(30) Priorität: 27.04.1993 DE 4313751
(43) Veröffentlichungstag der Anmeldung: 02.11.1994
(73) Patentinhaber: EGMO Ltd., Nahariya 22311 (IL)
(72) Erfinder: Rada, Arieh, Nahariya (IL); Grünberg, Josef, Nahariya (IL)
(74) Vertreter: Patentanwälte Ruff, Beier, Schöndorf und Mütschele

(56) Entgegenhaltungen:
- DE-A- 2 062 871
- DE-A- 2 748 201
- DE-A- 2 901 475
- DE-A- 3 315 244
- DE-C- 3 303 872
- GB-A- 1 193 190
- US-A- 3 184 214

## Beschreibung

### STAND DER TECHNIK

Aus den DE-C-33 03 872 und 33 15 244 sind Betätigungsvorrichtungen für drehbare Ventilstücke eines Ventils bekannt geworden, und zwar insbesondere für Drosselklappenventile. Sie enthalten einen meist einseitig pneumatisch beaufschlagbaren Pneumatikkolben, der in Gegenrichtung von einer Feder belastet ist und axial beweglich in einem Zylinder läuft. Mittels einer Kurvenführung und Mitnehmern wird diese Axialbewegung in eine Drehbewegung einer Abtriebswelle umgesetzt, die mit der Welle des drehbaren Verschlußstückes gekoppelt ist. Dabei sind die Kurvenführungen in der Außenführung des Kolbens angeordnet, so daß sich der Kolben innerhalb des Zylinders auch dreht. Eine zusätzliche Kurvenführung ist im Kolbeninneren angeordnet, die dazu vorgesehen ist, eine sich zu der anderen Drehbewegung überlagernde (subtrahierende oder addierende) Drehbewegung zu erzeugen.

Aus der DE-A-20 62 871 ist eine Ventilbetätigungsvorrichtung für ein Ventil bekannt geworden, dessen Verschlußstück axial beweglich ist. Es wird ebenfalls von einem Pneumatikzylinder betätigt, jedoch über ein Zwischenstück, das eine Kurvenführung enthält, in der Mitnehmer sowohl des Kolbens als auch der axialverschieblichen Ventilstange laufen. Die beiden Mitnehmer laufen dabei jeweils in einer axialen Nut und in unterschiedlichen Kurvenführungen an einer inneren Zwischenhülse. Durch eine hockeyschlägerartige Abknickung einer der Kurvenführungen soll in Schließlage des Ventils eine Sperrung erzielt werden.

Aus der GB-A-1 193 190 ist eine Betätigungsvorrichtung nach dem Oberbegriff des Anspruches 1 bekannt geworden, bei der sowohl die Öffnung- als auch die Schließbewegung ausschließlich durch hydraulische Betätigung eines Kolbens bewirkt wird. Die Kurvenführungen sind dabei entweder geknickt oder von Anfang an bis zum Ende kreisbogenförmig gekrümmt.

### AUFGABE UND LÖSUNG

Aufgabe der Erfindung ist es, einen Drehantrieb für ein Verschlußstück eines Ventils zu schaffen, das eine besonders einfach aufgebaute und wirksame Umsetzung der axialen Betätigungskraft in die Drehbewegung unter Berücksichtigung der Notwendigkeiten bei Ventilen mit drehbaren Verschlußstücken schafft.

Diese Aufgabe wird durch den Anspruch 1 gelöst.

Bei dieser Ausführung nimmt also die Betätigungskraft bis zur Schließstellung des Ventils ständig zu, so daß eine Schließung sichergestellt ist. Da aus Sicherheitsgründen die Schließstellung des Ventils meist durch die Federkraft erreicht wird, um bei Ausfall der das Ventil in die Öffnungsstellung überführenden Pneumatikenergie auch eine Schließung zu erzeugen, ist die zur Verfügung stehende Axialkraft begrenzt und bei Verwendung üblicher Schraubenfedern aufgrund der linearen Federkennlinien auch geringer als im Bereich der Offenstellung. Die kontinuierliche Winkelabnahme, die zu einem zunehmenden Untersetzungsverhältnis zwischen Linear-und Drehbewegung und damit zu einer Vergrößerung des zur Verfügung stehenden Drehmomentes führt, sorgt also für eine sichere Schließung des Ventils. Die zugehörige Führungsfläche hat zuerst einen Linearbereich, in dem das Verschlußstück von seiner unwirksamen Stellung, die meist 90 Grad von der Schließstellung entfernt liegt, bis in den Bereich der Schließstellung gedreht wird. Dann wird mit einem stärker gekrümmten Zwischenbereich ein Übergang zur stärker untersetzten Drehbewegung im Schließbereich erzielt, der dann mit einem wiederum etwas schwächer, aber kontinuierlich bis in die Schließstellung hinein gekrümmten Bereich der Führungsfläche die Bewegung des Schließkörpers in dem Bereich durchführt, in dem das Verschlußstück sich an die Dichtung anpreßt und durch einen ausreichenden Druck sichergestellt sein muß, daß es allseitig schließt.

Es ist vorteilhaft möglich, der Kurvenführung auf beiden Seiten einen unterschiedlichen Kurvenverlauf zu geben, so daß beim Öffnen und Schließen unterschiedliche Zuordnungen zwischen Linear- und Drehbewegung gegeben sein können. So kann beispielsweise zum "Aufbrechen" des Ventils anfänglich eine noch stärkere Untersetzung beim Öffnen des Ventils erzielt werden. Ein die Kurvenführung bildender Schlitz könnte also mit nicht parallelen, unterschiedlich gekrümmten oder geneigten Wandungen hergestellt werden.

Nach einer vorteilhaften Weiterbildung der Erfindung kann die Kurvenführung in der Wandung einer Kurvenführungshülse vorgesehen sein, die einseitig die Antriebswelle aufweist und auswechselbar in der Betätigungsvorrichtung angeordnet ist.

Durch die leichte Auswechselbarkeit dieses Drehelementes, das beispielsweise durch Lösen eines stirnseitigen Gewinderinges entnommen werden kann, ist es möglich, die gleiche Betätigungsvorrichtung je nach Bedarf an unterschiedliche Bedingungen anzupassen, beispielsweise unterschiedliche Ventilarten wie Drosselklappen-Kugelventile o. dgl. oder auch unterschiedliche Schwenkwinkel des Ventils zwischen der Offen- und Schließstellung zu berücksichtigen.

Bevorzugt ist eine Ausführung, bei der die Kurvenführung innerhalb eines an der Betätigungsvorrichtung festen, vorzugsweise an einem Zylinderdeckel des Pneumatikzylinders vorgesehenen Führungsteils liegt. Dieses kann ebenfalls hülsenförmig ausgebildet sein und eine Führungsbahn mit achsparalleler Ausrichtung aufweisen. Ein am Kolben angebrachter Mitnehmer, beispielsweise in Form eines an einem Mittelstutzen des Kolbens angebrachter Querbolzen mit jeweils zwei Rollen an seinen Enden, kann dann sowohl in der Kurvenführung als auch in der Führungsbahn abrollen und somit das Drehelement verschwenken, während der Kolben selbst sich nur axial verschiebt, was für seine Abdichtung vorteilhaft ist. Dies hat auch den Vorteil, daß der Kolben selbst keine Drehkräfte aufzunehmen hat und die Kraftein- und -überleitung auf kürzestem Wege erfolgt.

Nach einer weiteren vorteilhaften Weiterbildung der Erfindung sind im Drehantrieb des Verschlußstückes drehelastische Mittel vorgesehen. Bei vielen Ventilen, so beispielsweise bei Drosselklappenventilen, arbeitet das klappenartige Verschlußstück mit seinem Außenumfang mit einer elastischen Dichtung zusammen, in die sich die Drosselklappe beim Schließen seitlich hineindreht. Es muß dabei ein gewisser elastischer Schließdruck zwischen der Dichtung und dem Verschlußstück auftreten und diese muß auch über die gesamte Lebensdauer des Ventils und seiner Dichtung sichergestellt sein. Aus diesem Grunde ist es normalerweise vorgesehen, daß im Neuzustand die Schließstellung um einen geringen Betrag vor der konstruktiv festgelegten Schließlage liegt, die beispielsweise dann gegeben ist, wenn die Drosselklappe genau im rechten Winkel zur Kanalachse steht. Nach zahlreichen Ventilbetätigungen und/oder langen Betriebszeiten ändert sich also die Schließstellung durch Nachlassen der Elastizität des Ventilkörpers, Abnutzung o. dgl. Durch die drehelastischen Mittel wird im Drehantrieb eine Elastizitätsreserve geschaffen, die sicherstellt, daß im Neuzustand das Ventil nicht mit Gewalt in eine Lage gedreht wird, die über ihre sichere Schließlage hinausgeht und die Dichtung unnötig belasten würde, und andererseits wird durch die Elastizitätsreserve sichergestellt, daß auch bei nachgebender Dichtung im Laufe des Betriebes noch die endgültige Schließlage erreicht wird.

Die die Betätigungsvorrichtung in die Schließstellung überführenden, auf den Pneumatikkolben einwirkenden Federn können also stark genug gewählt werden, um den Kolben unter allen Bedingungen in die Endlage zu drücken. Die Elastizitätsreserve ist im Drehantrieb vorgesehen und wirkt dort weitgehend unmittelbar auf das Verschlußstück ein.

Erreicht werden kann die Drehelastizität durch entsprechende Ausbildung der Kurvenführung bzw. des sie aufweisenden Drehelementes. Die Kurvenführung kann also eine von einer Seite her geschlitzte Hülse sein, deren stehenbleibende Mantelabschnitte ausreichend elastisch sind, um diese Elastizitätsreserve zu erzeugen. Dabei ist das Drehelement so angeordnet, daß der Bereich, in dem die Mitnehmer die Kurvenführung kontaktieren, wenn sie nahe der Schließstellung stehen, am stirnseitigen Ende der Hülse liegt, wo also die Schlitze offen und dementsprechend die Elastizität am größten ist.

### ZEICHNUNGS-KURZ-BESCHREIBUNG

Diese und weitere Merkmale der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in der Zeichnung dargestellt und werden im folgenden näher erläutert. Es zeigen:
- Fig. 1: einen Längsschnitt durch eine Betätigungsvorrichtung,
- Fig. 2: einen Schnitt durch ein Drehelement,
- Fig. 3: eine den Verlauf einer Kurvenführung zeigende Abwicklung des Wandels des Drehelementes,
- Fig. 4: eine perspektivische Darstellung der Kurvenführungen und Mitnehmer und
- Fig. 5 und 6: zwei Positionen des Verschlußstückes in der Schließstellung.

### ZEICHNUNGS-BESCHREIBUNG

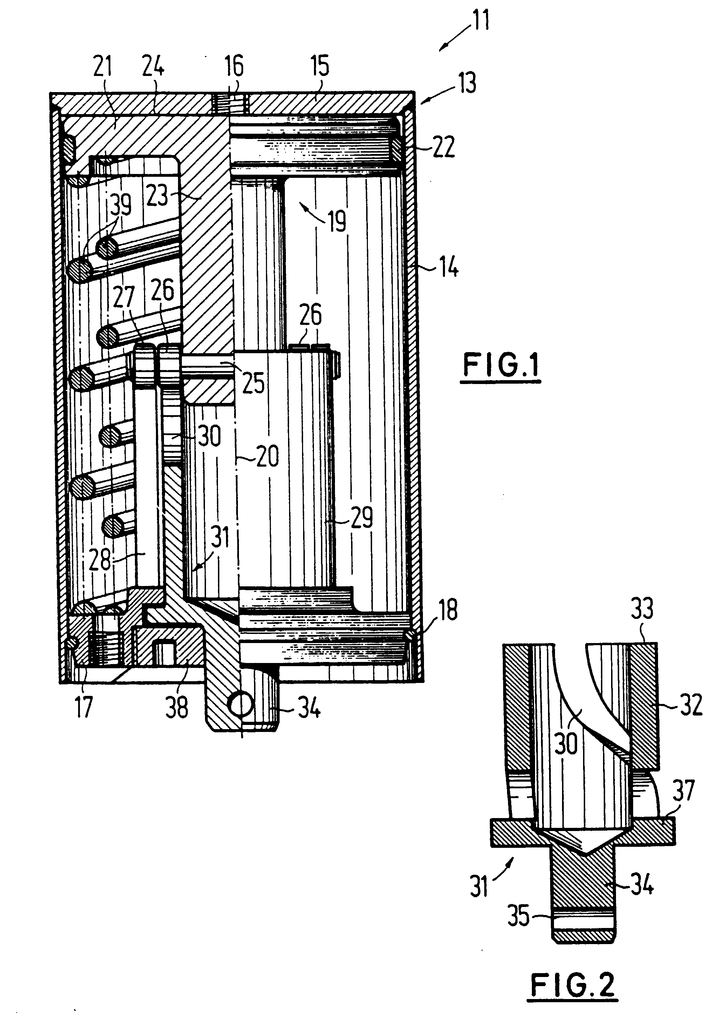

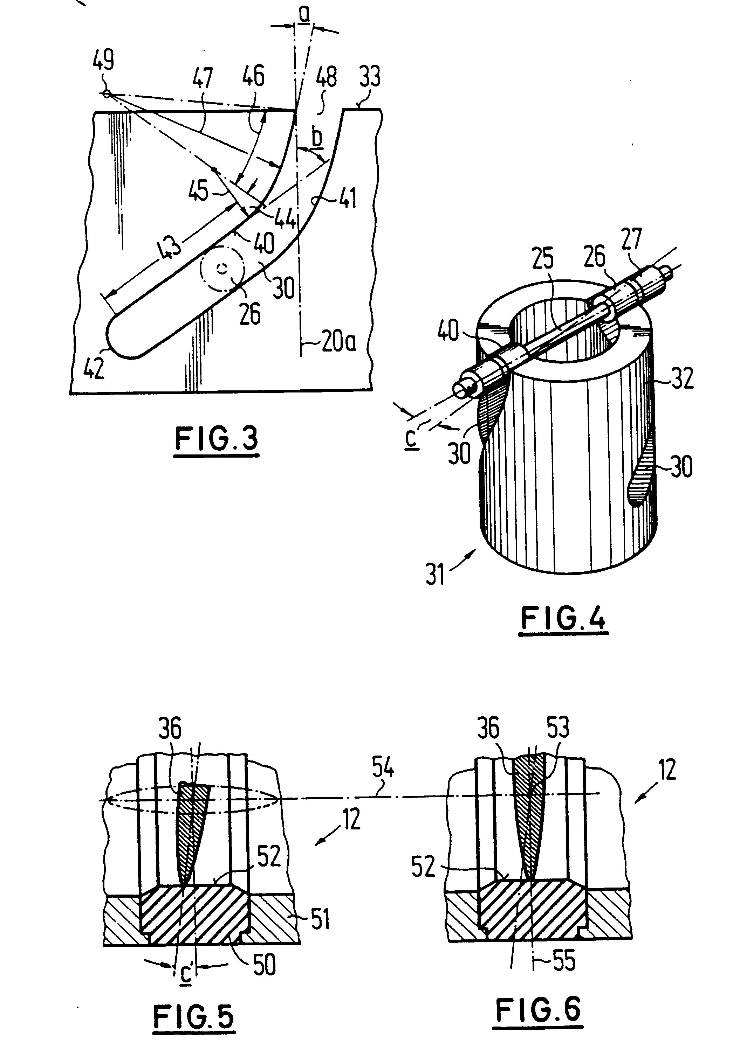

Fig. 1 zeigt eine Betätigungsvorrichtung 11 für ein drehbares Verschlußstück eines Ventils. Es kann sich dabei um ein Drosselklappenventil 12 handeln, von dem in den Fig. 5 und 6 Teile dargestellt sind. Die Betätigungsvorrichtung besteht aus einem Gehäuse 13 mit einem zylinder- oder rohrförmigen Mantel 14 und einem stirnseitigen Zylinderdeckel 15, in dem ein Pneumatikanschluß 16 mittig vorgesehen ist. Ein unterer Abschlußdeckel 17 ist mittels eines Befestigungsringes 18 am anderen Ende des Mantels von innen festgelegt.

Der Mantel 14 bildet einen Pneumatikzylinder, in dem ein Pneumatikkolben 19 in Richtung der Zylinderachse 20 verschiebbar ist. Der Kolben besteht aus einem scheibenförmigen Körper 21 mit äußerer Dichtung 22 und einem mittleren Zapfen 23, der von dem zwischen der Kolbenscheibe 21 und dem Zylinderdeckel gebildeten Arbeitsraum 24 des Pneumatikzylinders hinwegweist. Dieser Arbeitsraum ist in Fig. 1 lediglich durch eine Linie zu erkennen, weil der Kolben in der dargestellten, der Schließstellung des Ventils entsprechenden Stellung am Zylinderdeckel 15 anliegt und damit der Arbeitsraum "Null" ist.

Durch das untere Ende des Zapfens läuft quer ein Bolzen 25 hindurch, auf dessen beiden Enden jeweils zwei Mitnehmer-Rollen 26, 27, z. B. in Form von Kugellagern, drehbar angebracht sind. Der Mitnehmer 27 läuft in einer zur Zylinderachse 20 parallelen Führungsbahn 28 an einem hülsenförmigen, zur Kolbenseite vorstehenden Führungsteil 29 des unteren Abschlußdeckel 17. Der Mitnehmer 26 läuft in einer Kurvenführung 30, die in einem Drehelement 31 (s. auch Fig. 3 und 4) vorgesehen ist.

Das Drehelement 31 weist eine Hülse 32 auf, in der die Kurvenführung 30, wie auch die Führungsbahn 28 in dem Führungsteil 29, als die Wandung ganz durchbrechender Schlitz vorgesehen ist. Der hülsenförmige Mantel 32 des Drehelementes 31 hat eine freie Stirnfläche 33 und geht am anderen Ende in eine wellenstumpfartige Abtriebswelle 34 über, die durch beliebige Kupplungsmittel, beispielsweise durch in eine Querbohrung 35 eingesteckte Stifte, mit einem Verschlußkörper 36 des Ventils 12 gekuppelt werden kann (Fig. 5 und 6).

Das Drehelement 31 ist in dem Abschlußdeckel 17 drehbar gelagert, wobei ein seitlicher Flansch 37, möglicherweise aber auch andere Absätze oder Ringnuten, für eine axiale Festlegung sorgen.

Der Einbau erfolgt mittels eines Befestigungsringes 38, der in den Abschlußdeckel 17 eingeschraubt ist. Durch Lösen dieses Ringes kann das Drehelement, daß in einem einfach geformten, einstückigen Teil sämtliche drehbaren Elemente der Vorrichtung einschließlich der Kurvenführung und der Abtriebswelle beinhaltet, entnommen und gegen ein anders geformtes ausgetauscht werden, beispielsweise mit anderem Drehwinkel zwischen den beiden Extremlagen und/oder anderer Linear/Dreh-Umsetzungscharakteristik.

Zwischen die oberen und unteren Schulterflächen des Flansches 37 und den zugehörigen Flächen des Abschlußdeckels 17 bzw. des Befestigungsringes 38 können Gleitringe, z.B. aus reibungsarmem Kunststoff wie PTFE, eingelegt sein.
Fig. 3 zeigt die Abwicklung des Mantels 32 des Drehelementes 31 mit einer der Kurvenführungen 30, von der zwei am Umfang vorgesehen sind. Die aus einem den Mantel durchbrechenden Schlitz bestehende Kurvenführung 30 weist an ihren beiden Seiten Kurvenflächen 40, 41 auf, die bei dem Abrollen des Mitnehmers 26 auf diesen Flächen unterschiedlichen Funktionen zugeordnet sind. So ist beispielsweise die Kurvenfläche 40 bei einer durch die den einfach wirkenden Pneumatikkolben 19 aufwärts belastenden Federn 39 bewirkten Aufwärtsbewegung des Pneumatikkolbens (in die Schließlage des Verschlußkörpers 36) mit dem Mitnehmer 26 im Eingriff, während die Kurvenfläche 41 beim Öffnen mit dem Mitnehmer 26 in Eingriff kommt.

Die Schließrichtungs-Kurvenfläche 40 ist wie folgt gestaltet: Vom Grund 42 der Kurvenführung erstreckt sich ein linearer, d. h. gerader Abschnitt 43 bis zu einem Zwischenabschnitt 44 mit relativ kleinem Krümmungsradius 45. Von dort aus bis zum Ende der Kurvenführung 30 (an der Stirnfläche 33) verläuft ein gekrümmter Kurvenabschnitt 46, der beim Ausführungsbeispiel als Kreisbogenabschnitt mit einem größeren Krümmungsradius 47 gezeigt ist. Die Krümmung erstreckt sich also bis zum wirksamen Ende 48 der Kurvenführung 30. Der Winkel a zwischen der Richtung der Kurvenfläche 40 und einer Parallelen 20 a zur Zylinderachse 20 ist zwar in diesem Bereich kleiner als der entsprechende Winkel b im Bereich des Linearabschnittes 43, ist aber immer noch nicht Null, was auch an dem entsprechend oberhalb der Stirnfläche 33 liegenden Krümmungsmittelpunkt 49 zu erkennen ist. An das wirksame Ende 48 der Kurvenführung 30 kann sich noch ein unwirksamer Abschnitt anschließen, auf dessen Ausrichtung es nicht ankommt, der beim Ausführungsbeispiel aber vermieden ist, um die Baulänge der Betätigungsvorrichtung gering zu halten.

Fig. 4 zeigt den oberen Abschnitt des Drehelementes 31 und die Mitnehmer 26, 27 mit ihrem Lagerbolzen 25, jedoch ohne den Pneumatikkolben 19. Es ist zu erkennen, daß die schraubenförmig gekrümmten Abschnitte des Mantels 32, die zwischen den schlitzförmigen Kurvenführungen 30 gebildet sind, so elastisch gestaltet werden können, daß sie bei entsprechendem Drehmoment, d. h. entsprechendem Druck der Mitnehmer 26 auf die zugehörigen Führungsflächen 40 oder 41 eine Auslenkung nach Art einer Torsionsfederung um den (hier übertrieben dargestellten) Winkel c wirken können.

Fig. 5 und 6 zeigen jeweils eine Ventildichtung 50 in einem Gehäuse 51 eines Ventils 12. Mit der Dichtfläche 52 der Dichtung 50 wirkt der Ventilkörper 36 zusammen. Der Verschlußkörper 36 ist um eine Achse 53, die abgedichtet durch die Dichtung 50 hindurch verläuft, schwenkbar, und zwar zwischen einer in Figur 5 strichpunktiert dargestellten Offenstellung und der in Vollinien dargestellten Schließstellung.

Es ist zu erkennen, daß in Fig. 5 die Schließstellung nicht der Lage entspricht, die einen rechten Winkel mit der Offenstellung des Ventilkörpers bzw. einer Mittelachse 54 des Ventilgehäuses 51 entsprechen würde, sondern um einen Winkel c' davon abweicht.

In Fig. 6 steht dagegen der scheibenförmige Ventilkörper 36 auf der mit der Achse 54 einen rechten Winkel bildenden Mittelachse 55 der Dichtung.

### FUNKTION

Die Betätigungsvorrichtung arbeitet wie folgt: Die in Fig. 1 dargestellte Ruheposition entspricht der Schließstellung des Ventils. Der Kolben 19 liegt am Zylinderdeckel 15 an unter der Kraft der vorgespannten Schraubenfedern 39 am Zylinderdeckel an.

Wenn über dem Pneumatikanschluß 36 Druckluft in den Zylinder eingelassen wird, bewegen sich der Kolben 19 und damit auch die Mitnehmer 26, 27 nach unten. Sie rollen dabei auf der Führungsbahn 28 und der Kurvenführung 30 ab, wobei der Mitnehmer 26 bei der Abwärtsbewegung auf der Kurvenfläche 41 läuft. Während der Mitnehmer 26 in der vertikalen Führungsbahn 28 dafür sorgt, daß der Kolben sich nicht dreht, wird durch das Abrollen des Mitnehmers 26 auf der Kurvenfläche 41 der Kurvenführung 30 das Drehelement 31 um die Achse 20 gedreht, und zwar um den durch die Kurvenführung vorgegebenen Winkel, so in dem dargestellten Beispiel um etwa 90 Grad. Dabei wird der Verschlußkörper 36 aus der Schließposition in die Öffnungsposition überführt und die Federn 39 werden gespannt.

Wenn zum Schließen des Ventils (oder durch eine Betriebsstörung) der Pneumatikdruck abgelassen wird, so bewegen die Federn 39 den Kolben 19 nach oben. Dabei läuft wiederum der Mitnehmer 26 in der Kurvenführung 30, und zwar nun auf der Kurvenfläche 40. Dabei läuft sie anfänglich auf einem linearen Abschnitt 43, der einen relativ großen Winkel b mit der Zylinderachsparallele 20 a bildet. Dadurch wird der Ventilkörper 30 relativ schnell bis kurz vor die Position gedreht, in der er mit der Dichtung 50 in Eingriff kommen könnte.

Danach läuft der Mitnehmer 26 über den Zwischenbereich und kommt dadurch relativ schnell in den gekrümmten Bereich 46, in dem nun progressiv das Untersetzungsverhältnis zwischen Linear- und Drehbewegung zunimmt. Dies gleicht eine gewisse Abnahme der Federkraft aus, überwiegt dies aber bei weitem, so daß kurz vor der Schließstellung, wie der relativ kleine Winkel a zeigt, das größte Drehmoment vorliegt.

Durch diese Kurvengestaltung wird also bei vorgegebenen Bedingungen ein optimales Verhältnis zwischen Baugröße und aufgewendeter Energie (Pneumatikverbrauch und -druckbedarf) einerseits zur erreichbaren Schließkraft andererseits erzeugt. In den Bereichen, in denen sich der Ventilkörper 36 leicht bewegt, wird durch den Linearabschnitt ein im wesentlichen gleichmäßiges Drehmoment erzeugt, das dann, wenn die ersten Hemmnisse (Reibung und Zusammendrückung der Dichtung) auftreten können, progressiv bis zur Schließstellung erhöht wird. Die Verwendung von Kreisbogensegmenten zur Gestaltung der gekrümmten Abschnitte der Führungsfläche hat sich unter den geschilderten Voraussetzungen als optimal erwiesen.

Wenn, anders als bei dem dargestellten Ausführungsbeispiel, die beiden Kurvenflächen 40, 41, unterschiedlich gestaltet und geformt sind, ist die Charakteristik der Linear/Rotations-Umsetzung in beiden Bewegungsrichtungen des Kolbens unterschiedlich. Dies kann auch durch einen gegenüber der Breite des Schlitzes der Kurvenführung 30 geringeren Durchmessser der Rollen 26 bewirkt werden. Dies ermöglicht beispielsweise eine Anpassung an verschiedenen Drehmomentbedarf bei der Öffnung von unterschiedlichen Ventiltypen, z.B. Kugelhähnen oder Klappenventilen.

Im Bereich der in den Fig. 5 und 6 dargestellten Schließstellung bildet sich durch elastische Nachgiebigkeit des Drehelementes 31 einerseits und evtl. des Führungsteils 29, das die Führungsbahn 28 trägt, andererseits (oder auch beider zusammen) eine Elastizitätsreserve, die es ermöglicht, im Neuzustand der Dichtung 50 die in Fig. 5 gezeigte Position des Ventils zu ermöglichen, während bei etwas weiter abgenutzter Dichtung die Ventillager nach Fig. 6 ebenfalls unter dem nötigen Schließdruck angesteuert werden kann.

Es ist zu erkennen, daß die Betätigungsvorrichtung nach der Erfindung in idealer Weise Wirksamkeit, vielseitige Verwendbarkeit und geringe Baugröße sowie geringen Energieaufwand und Betriebssicherheit unter verschiedenen Gegebenheiten in sich vereinigt, wozu die einzelnen Merkmale beitragen. Besonders bevorzugt ist die Vorrichtung in Kombination aller dargestellten und beschriebenen Merkmale. Es ist vor allem auch möglich, die Vorrichtung sehr wirtschaftlich aus korrosionsbeständigen Materialien herzustellen, weil die Teile entweder so einfach sind, daß sie aus einfachen Bauelementen, wie Rohren, Scheiben o. dgl. aus rostfreiem Stahl hergestellt werden können, während die übrigen Teile von ihrer Statik und Funktion her so gestaltet sind, daß sie, wie beispielsweise der Kolben und die anderen Bauteile, aus Kunststoff herzustellen sind.

## Patentansprüche

1. Betätigungsvorrichtung für einen drehbaren Verschlußkörper (36) eines Ventils (12), insbesondere eines Drosselklappenventils, mit einem zumindest einseitig pneumatisch beaufschlagbaren Kolben (19), der axial bewegbar ist und mittels einer Kurvenführung (30) und Mitnehmern (26) diese Axialbewegung in eine Drehbewegung einer mit einer Welle des Verschlußkörpers (36) kuppelbaren Abtriebswelle (34) umsetzt, wobei die Kurvenführung (30) in ihrer Abwicklung eine zumindest in ihrem der Ventil-schließstellung zugeordneten Abschnitt (46) kontinuierlich in Richtung auf eine Verkleinerung eines Winkels (a, b) zwischen wenigstens einer ihrer Führungsflächen (40) und einer Parallelen(20 a) zur Kolbenachse (20) gekrümmt ist, dadurch gekennzeichnet, daß die Abwicklung der Führungsfläche (40) von einem vom Bereich der Offen-Stellung des Ventils (12) ausgehenden geradlinig verlaufenden Linearabschnitt (43) über einen stärker gekrümmten Zwischenabschnitt (44) in einen schwächer gekrümmten Kurvenabschnitt (46) der Kurvenfläche (40) übergeht und daß eine den Kolben (19) in seine Endlage drückende Federkraft (39) vorgesehen ist.

2. Betätigungsvorrichtung nach Anspruch 1, dadurch gekennzeichnet, daß die Krümmungen Kreisbogen-Krümmungen sind.

3. Betätigungsvorrichtung nach Anspruch 1 oder 2, dadurch gekennzeichnet, daß die Kurvenführung (30) je eine der Öffnungs- und Schließbewegung des Ventils zugeordnete Kurvenfläche (40, 41) aufweist, die einen voneinander unterschiedlichen Kurvenverlauf aufweisen.

4. Betätigungsvorrichtung nach einem der vorhergehenden Ansprüche, dadurch gekennzeichnet, daß die Kurvenführung (30) in der Wandung (32) eines Drehelementes (31) vorgesehen ist, das einseitig die Abtriebswelle (34) aufweist und auswechselbar in der Betätigungsvorrichtung (11) angeordnet ist.

5. Betätigungsvorrichtung nach Anspruch 4, dadurch gekennzeichnet, daß das Drehelement (31) in einer Stirnseite (17) der Betätigungsvorrichtung (11) drehbar gelagert und nach dem Lösen eines Befestigungsringes (38) entnehmbar ist.

6. Betätigungsvorrichtung nach einem der vorhergehenden Ansprüche, dadurch gekennzeichnet, daß die Kurvenführung (30) innerhalb eines an der Betätigungsvorrichtung (11) festen, vorzugsweise an einem Zylinderdeckel (17) des Pneumatikzylinders vorgesehenen, insbesondere hülsenförmigen Führungsteil (29) liegt, das eine im wesentlichen zur Zylinderachse (20) parallele Führungsbahn (28) aufweist, und daß am Kolben (19) angebrachte Mitnehmer (26, 27), insbesondere Rollen, mit der Kurvenführung (30) und der Führungsbahn (28) zusammenwirken.

7. Betätigungsvorrichtung nach einem der vorhergehenden Ansprüche, gekennzeichnet durch drehelastische Mittel im Drehantrieb des Verschlußkörpers (36).

8. Betätigungsvorrichtung nach einem der vorhergehenden Ansprüche, dadurch gekennzeichnet, daß wenigstens eine Kurvenfläche (40, 41) der Kurvenführung (30) und/oder einer Führungsbahn (28) in Umfangsrichtung elastisch nachgiebig ausgebildet sind.

9. Betätigungsvorrichtung nach einem der vorhergehenden Ansprüche, dadurch gekennzeichnet, daß die Kurvenführung (30) und/oder eine Führungsbahn mit wenigstens zwei die Wandung (32, 29) einer Hülse durchdringenden Schlitzen ausgebildet sind, wobei die zwischen den Schlitzen befindlichen Wandungsabschnitte elastisch nachgiebig sind, wobei vorzugsweise die Schlitze zu einer Stirnseite (33) der Hülse offen sind.

10. Betätigungsvorrichtung nach einem der Ansprüche 7 bis 9, dadurch gekennzeichnet, daß die Drehelastizität zumindest in dem der Ventil-Schließstellung zugeordneten Bereich vorgesehen ist und/oder in Richtung auf diesen Bereich zunimmt.

## Claims

1. Actuating device for a rotary closure body (36) of a valve (12), particularly a butterfly valve, with a piston (19) pneumatically actuatable on at least one side and which is axially movable and by means of a curved guide (30) and dogs (26) said axial movement can be transformed into a rotary movement of a driven shaft (34) couplable to a shaft of the closure body (36), in which in its development the curved guide (30) in its portion (46) associated with the valve closed position is continuously curved in the direction of a reduction of an angle (a, b) between at least one of its guide faces (40) and a parallel (20a) to the piston axis (20), characterized in that the development of the guide face (40) passes from a linearly directed linear portion (43) emanating from the vicinity of the open position of the valve (12), via a more curved intermediate portion (44) into a less curved curved portion (46) of the curved face (40) and that a spring tension (39) pressing the piston (19) into its end position is provided.

2. Actuating device according to claim 1, characterized in that the curves are arcuate curves.

3. Actuating device according to claim 1 or 2, characterized in that the curved guide (30) has a curved face (40, 41) each associated with the open or closed position and which have a differing curve configuration.

4. Actuating device according to one of the preceding claims, characterized in that the curved guide (30) is provided in the wall (32) of a rotary element (31), which has on one side the driven shaft (34) and is replaceably located in the actuating device (11).

5. Actuating device according to claim 4, characterized in that the rotary element (31) is mounted in rotary manner in a front end (17) of the actuating device (11) and is removable after releasing a fastening ring (38).

6. Actuating device according to one of the preceding claims, characterized in that the curved guide (30) is located within an in particular sleeve-like guide part (29) fixed to the actuating device (11) and preferably provided on a cover (17) of the pneumatic cylinder and which has a guideway (28) substantially parallel to the cylinder axis (20), and that dogs (26, 27), particularly rolls, fitted to the piston (19), cooperate with the curved guide (30) and guideway (28).

7. Actuating device according to one of the preceding claims, characterized by torsionally elastic means in the rotary drive of the closure body (36).

8. Actuating device according to one of the preceding claims, characterized in that at least one curved face (40, 41) of the curved guide (30) and/or a guideway (28) are circumferentially elastically resiliently constructed.

9. Actuating device according to one of the preceding claims, characterized in that the curved guide (30) and/or a guideway are constructed with at least two slots penetrating the wall (32, 29) of a sleeve, the wall portions between the slots being elastically resilient and preferably the slots are open to an end face (33) of the sleeve.

10. Actuating device according to one of the claims 7 to 9, characterized in that the torsional elasticity is provided at least in the area associated with the valve closed position and/or increases in the direction of said area.

## Revendications

1. Dispositif de commande pour un corps d'obturation rotatif (36) d'une soupape (12), notamment d'une soupape à clapet d'étranglement, avec un piston (19) pouvant être sollicité pneumatiquement au moins d'un côté, qui est axialement mobile et qui, au moyen d'un guide à came (30) et d'entraîneurs (26), transforme ce mouvement axial en un mouvement de rotation d'un arbre de sortie (34) pouvant être accouplé à un arbre du corps d'obturation (36), le guide à came (30) étant, dans sa projection développée, au moins dans sa partie (46) associée à la position de fermeture de la soupape, courbé de façon continue dans le sens d'une diminution d'un angle (a, b) entre au moins une de ses faces de guidage (40) et une parallèle (20a) à l'axe (20) du piston, caractérisé en ce que la projection développée de la face de guidage (40), à partir d'une partie linéaire (43) à allure rectiligne partant de la région de la position d'ouverture de la soupape (12), se poursuit, en passant par une partie intermédiaire (44) de courbure supérieure, par une partie de came (46) de courbure inférieure de la face de came (40), et en ce qu'est prévue une force de ressort (39) qui presse le piston (19) dans sa position finale.

2. Dispositif de commande selon la revendication 1, **caractérisé** en ce que les courbures sont des courbures en arc de cercle.

3. Dispositif de commande selon la revendication 1 ou 2, **caractérisé** en ce que le guide à came (30) présente des faces de came (40, 41) respectivement associées à la position d'ouverture et à la position de fermeture de la soupape, qui présentent des allures de came respectives différentes.

4. Dispositif de commande selon une des revendications précédentes, **caractérisé** en ce que le guide à came (30) est prévu dans la paroi (32) d'un élément de rotation (31) qui présente d'un côté l'arbre de sortie (34) et est disposé de façon interchangeable dans le dispositif de commande (11).

5. Dispositif de commande selon la revendication 4, **caractérisé** en ce que l'élément de rotation (31) est monté à rotation dans un côté frontal (17) du dispositif de commande (11) et peut être déposé après dévissage d'une bague de fixation (38).

6. Dispositif de commande selon une des revendications précédentes, **caractérisé** en ce que le guide à came (30) se trouve à l'intérieur d'une partie de guidage (29) fixée sur le dispositif de commande (11), de préférence prévue sur un couvercle de cylindre (17) du vérin pneumatique et notamment en forme de douille, qui présente une voie de guidage (28) sensiblement parallèle à l'axe (20) du cylindre, et en ce que des entraîneurs (26, 27) montés sur le piston (19), notamment des galets, coopèrent avec le guide à came (30) et la voie de guidage (28).

7. Dispositif de commande selon une des revendications précédentes, **caractérisé** par des moyens élastiques en rotation dans l'entraînement en rotation du corps d'obturation (36).

8. Dispositif de commande selon une des revendications précédentes, **caractérisé** en ce qu'au moins une face de came (40, 41) du guide à came (30) et/ou une voie de guidage (28) sont réalisées élastiquement flexibles en direction circonférentielle.

9. Dispositif de commande selon une des revendications précédentes, **caractérisé** en ce que le guide à came (30) et/ou une voie de guidage sont formés par au moins deux fentes traversant la paroi (32, 29) d'une douille, les parties de paroi se trouvant entre les fentes étant élastiquement flexibles, et les fentes étant de préférence ouvertes vers un côté frontal (33) de la douille.

10. Dispositif de commande selon une des revendications 7 à 9, **caractérisé** en ce que l'élasticité en rotation est prévue au moins dans la région associée à la position de fermeture de la soupape, et/ou augmente en direction de cette région.
